# EUROPÄISCHE PATENTSCHRIFT

(11) **EP 1 548 401 B1**
(45) Veröffentlichungstag und Bekanntmachung des Hinweises auf die Patenterteilung: **05.08.2015**
(21) Anmeldenummer: 04025262.9
(22) Anmeldetag: 13.12.2003
(51) Int. Cl.: G01B 11/30, G01N 21/88, G01J 3/46

(54) **Vorrichtung und Verfahren zur Prüfung von Oberflächen, insbesondere von Stahloberflächen, z.B. hinsichtlich Struktur, Farbintensität und/oder Farbverteilung**
Apparatus and method for the inspection of surfaces, in particular steel surfaces, eg. with respect to structure, color intensity, and/or color distribution
Dispositif et procédé pour l'inspection de surfaces, en particulier de surfaces d'acier, p. ex. par rapport à la structure, l'intensité de couleur et/ou la distribution de couleur

(43) Veröffentlichungstag der Anmeldung: 29.06.2005
(62) Teilanmeldung aus: 03028778.3
(73) Patentinhaber: Muehlhan AG, 21107 Hamburg (DE)
(72) Erfinder: Greverath, Wulf-Dieter, Dr., 22605 Hamburg (DE); Momber, Andreas, Dr., 21073 Hamburg (DE); Opel, Helmut, Dr., 22299 Hamburg (DE)
(74) Vertreter: von Eichel-Streiber, Caspar

(56) Entgegenhaltungen:
- EP-A- 0 774 645
- EP-A- 1 167 577
- DE-A- 19 733 775
- US-A- 4 878 114
- US-A- 4 917 492
- US-A- 5 283 642
- US-A- 5 495 429
- US-A- 5 642 293

## Beschreibung

Die vorliegende Erfindung betrifft ein Verfahren zur Beurteilung von Oberflächenzuständen, wie Struktur und/oder Farbintensität bzw. -verteilung, insbesondere von (un) beschichteten Stahloberflächen.

Im Stand der Technik sind die unterschiedlichsten optischen Oberflächenprüfgeräte bekannt. Es sei beispielsweise auf die DE 26 37 375 C2 hingewiesen sowie auf die JP 10089939 A, die sich jedoch mit anderen Problematiken beschäftigen. In der Praxis wurden bisher Oberflächenzustände wie folgt beurteilt:
Die Beurteilung von Farbintensität und -verteilung erfolgt visuell durch den Vergleich der zu beurteilenden Oberflächen mit in gedruckten Katalogen enthaltenen Standardphotographien. Die photographischen Vergleichsbilder in den verschiedenen Katalogen sind nicht unter standardisierten Bedingungen aufgenommen worden und weichen daher in Format, Größe, Skalierung und Färbung beträchtlich voneinander ab. Diese Art der Beurteilung ist problematisch aus verschiedenen Gründen. Zunächst handelt es sich um das Ergebnis einer subjektiven, personengebundenen Beurteilung. Weiterhin verfälschen natürliche Reflexionen an den zu beurteilenden Oberflächen das Ergebnis. Die aktuelle Beleuchtungssituation (z.B. Sonneneinstrahlung, künstliches Licht, Größe und Farbe der Gesamtfläche) beeinflusst das Ergebnis ebenfalls entscheidend.

Die Beurteilung der Oberflächenstruktur (hier insbesondere die Rauheit) erfolgt bisher mit Hilfe von visuellen bzw. taktilen Vergleichsmustern, die jedoch nur die Bestimmung von Bereichen des entsprechenden Strukturkennwertes (z.B. Rauheitsbereich von 40 µm bis 70 µm) ermöglichen, nicht jedoch die Bestimmung von Einzelwerten. Zudem ist auch dieses Vorgehen geprägt von subjektiven Einflüssen. Zur Beurteilung der Oberflächenstruktur stehen darüber hinaus mechanische und optische Abtastgeräte zur Verfügung. Diese Geräte erfordern hohe Investitionen und sehr viel Wartung. Sie sind im strengen Sinne für den Maschinenbau im stationären Bereich entwickelt worden und haben sich im mobilen Einsatz nicht durchgesetzt.

Es ist keine mobile, zur gleichzeitigen und objektiven Prüfung von Struktur und Farbintensität bzw. -verteilung geeignete Vorrichtung bekannt.

Aus EP1167577 ist bekannt, Farbe und Rauheit eines gebeizten Stahlbands mit Kameras zu erfassen. Durch Vergleich mit gespeicherten Mustern wird ein Steuersignal für die Beizparameter erzeugt. Der Erfindung liegt deshalb die Aufgabe zugrunde, eine weitgehend objektive und standardisierte Beurteilung von Oberflächenzuständen zu ermöglichen, wie sie beispielsweise bei der Struktur und/oder Farbintensität und -verteilung auftreten. Ein weiteres Ziel der Erfindung ist es, ein Verfahren zu schaffen, das wiederholbare Ergebnisse von Oberflächenzuständen liefert, die äußerst objektiv sind und sich aufgrund dessen wiederum selbst gut als Vergleichsmuster verwerten lassen.

Diese Aufgabe wird durch das im Anspruch 1 definierte Verfahren zur Beurteilung von Oberflüchenzuständen gelöst.

Das Oberflächenprüfverfahren ermöglicht die standardisierte und damit objektive Erfassung, Beurteilung und Einordnung von Oberflächen bzw. derer Zustände. Mit Hilfe des Verfahrens werden die Oberflächen photographisch erfasst, digitalisiert und übertragen.

Das Verfahren besteht in der standardisierten und damit objektiven Erfassung, Beurteilung und Einordnung von Oberflächen bzw. derer Zustände. Das Verfahren lässt sich im Baustellenbetrieb anwenden. Die Oberfläche bzw. deren Zustände werden zunächst mit Hilfe eines Rahmens und den darin integrierten Modulen optisch erfasst. Das erfasste Oberflächenelement wird dabei sofort digitalisiert. Das Digitalbild wird in eine Auswertungseinrichtung übertragen und dort mit in dieser Einrichtung bereits vorhandenen Standardbildern verglichen. Der Vergleich erfolgt auf Basis bestimmter Oberflächenzustände, insbesondere Farbintensität und -verteilung sowie Oberflächenstruktur. Diese Oberflächenzustände werden in der Auswertungseinrichtung zu Vergleichszwecken sowohl grafisch (in Diagrammform) als auch diskret (in Tabellenform) dargestellt. Dabei wird das zu beurteilende Digitalbild automatisch dem Standardbild zugeordnet, dessen Oberflächenzustände maximale Ähnlichkeiten mit den Oberflächenzuständen des Digitalbildes aufweisen.

Weitere Vorteile und Merkmale gehen aus den abhängigen Ansprüchen hervor, die auch gemeinsam mit dem unabhängigen Anspruch 1 von erfinderischer Bedeutung sein können. Zum besseren Verständnis der Erfindung wird dieselbe nunmehr anhand der Zeichnung näher erläutert.

Es zeigt:
- Bild 1: eine schematische Perspektivansicht einer zur Ausführung des erfindungsgemäßen Verfahrens einsetzbaren optischen Oberflächenprüfvorrichtung;
- Bild 2: eine graphische perspektivische Darstellung in zwei Schritten von Digitalkamera (Datenerfassung) und Datenverarbeitungsanlage;
- Bild 3: eine fotografische Abbildung der zu untersuchenden Stahloberfläche mit einer Meßlinie, wobei im unteren Bereich das Profil entlang dieser Meßlinie dargestellt wird.

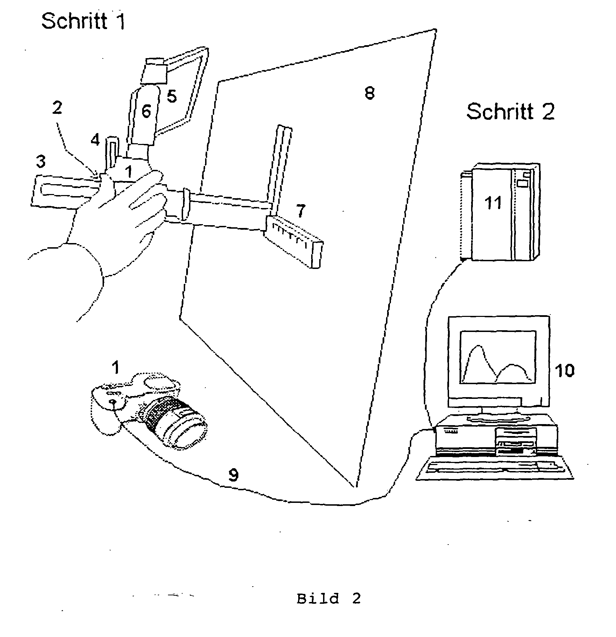

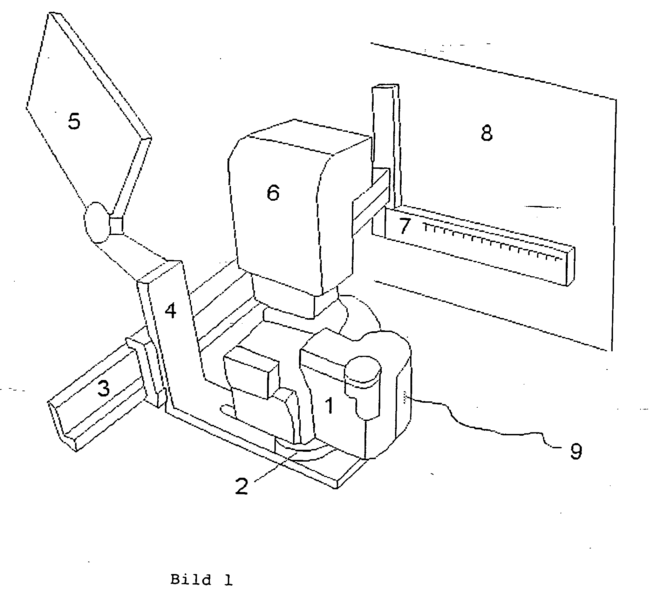

Bild 1 zeigt den Aufbau einer zur Ausführung des erfindungsgemäßen Verfahrens einsetzbaren Oberflächenprüfeinrichtung. Die Kamera 1 ist mit einer Halterung 2 auf einem System von horizontalen 3 und vertikalen 4 Verschiebevorrichtungen befestigt. Ein Blitzschuh 6 als Energieversorgung, der die Kamera 1 mit einem Flächenblitz 5 verbindet, sowie der Flächenblitz 5 gewährleisten die gewünschte standardisierte Beleuchtung der Oberfläche 8. Eine Skalierung 7 auf einem in definierten Abstand befindlichen Elelement dient als Maßstab für die spätere Auswertung (siehe Bild 2).

Es dürfte einleuchten, dass sämtliche für das Oberflächenprüfverfahren vorgesehenen Teile in einen kleinen, möglichst stoßfesten Koffer (nicht gezeigt) passen und so einfach und schnell transportabel sind. Ferner kann das Verfahren einfach gehandhabt werden, da ihr Auf- bzw. Zusammenbau einfach zu bewerkstelligen ist. Insofern kann die Stahloberfläche 8 vor Ort untersucht werden, da diese sich häufig an stationären Objekten befindet, bzw. Brücken, aufgedockte Schiffe bzw. sonstige Stahlkonstruktionen. Ebenso ist es selbstverständlich, dass sich das erfindungsgemäße Verfahren auch an beweglichen Objekten sowie bei anderen Materialien als Stahl einsetzen läßt. Die gewünschte Mobilität kann also erfindungsgemäß erzielt werden.

Bild 2 zeigt den verfahrensgemäßen Ablauf mit Auswertung der aufgenommenen Digitalfotos und anschließender Beurteilung der Oberflächen in einer Datenverarbeitungsanlage. Die Oberfläche 8 wird zunächst von der Kamera 1, die mittels einer Halterung 2 befestigt ist, im Schritt 1 mittels einer vertikalen 3 sowie einer horizontalen 4 Verschiebungseinrichtung in die vorgeschriebene Position gebracht wird, aufgenommen. Diese geometrisch definierte Standardeinstellung wird ergänzt durch eine Standardbelichtung, die mittels eines Blitzschuhs 6 sowie eines Flächenblitzes 5 realisiert wird. Das Bild der Oberfläche 8 wird - einschließlich des integrierten Maßstabs 7 - digitalisiert und mittels eines Kabels 9 in einen Computer 10 übertragen. Eine im Computer installierte Software vergleicht vorgegebene Merkmale des Bildes der Oberfläche 8 mit den Merkmalen von in einem Speicher 11 abgelegten Standardoberflächen und ordnet die aufgenommene Oberfläche 8 einer bestimmten Standardoberfläche zu.

Nach dem Aufnehmen der Digitalfotos vor Ort im Schritt 1 wird die Kamera zusammen mit den üblichen Teilen wieder eingepackt und an einem gewünschten, entfernt liegenden Ort über ein Kabel 9 oder dgl. mit einer elektronischen Datenverarbeitungsanlage (10,11) für die Auswertung verbunden. Es dürfte jedoch ebenfalls für den Fachmann einleuchten, dass er diese Auswertung ggf. auch vor Ort durchführen kann, sofern statt einer größeren Datenverarbeitungsanlage lediglich ein gut ausgerüstetes, tragbares Notebook (nicht gezeigt) verwendet wird, das über eine geeignete Software und Speicher verfügt.

Sämtliche Teile der für das erfindungsgemäße Verfahren einsetzbaren Vorrichtung, wie sie hier im Bild 2 gezeigt werden, sind handelsüblich und müssen lediglich in der gewünschten Anordnung zusammengestellt und zusammengebaut werden. Bei der erwähnten installierten Software handelt es sich beispielsweise um das Programm ImagePro Plus der Firma Media Cybernetics, so dass auch ohne weiteres auf einem Notebook installiert werden kann, da es lediglich 82 MB umfaßt.

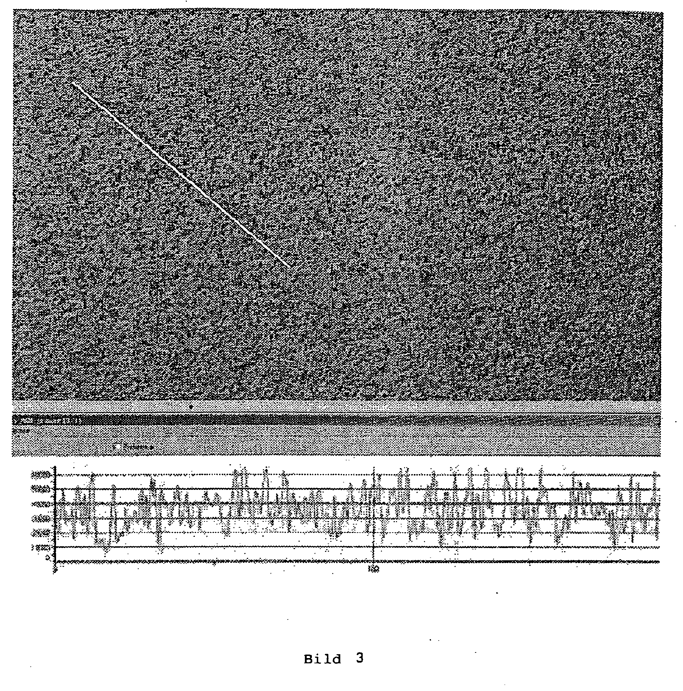

Bild 3 verdeutlicht die Beurteilung der Oberflächenstruktur als typischen Zustand einer Oberfläche. Auf der digitalisierten Photographie im oberen Bildteil wird eine (im Bild weise) Messlinie angelegt. Entlang dieser Linie werden die Hell-Dunkel-Unterschiede des Untergrundes gemessen und mit Hilfe des Maßstabs kalibriert. Hierbei gelten helle Teilbereiche als tiefer liegende, und dunkle Teilbereiche als höher liegende Regionen. Im Ergebnis entsteht die im unteren Bildteil aufgetragene Profildarstellung, aus der sich zum Beispiel ein mittlerer Rauheitswert errechnen lässt.

## Patentansprüche

1. Verfahren zur Beurteilung von Oberflächenzuständen, wie Struktur und/oder Farbintensität bzw. -verteilung, insbesondere von (un)beschichteten Stahloberflächen, mit folgenden Schritten:
a. Aufsetzen einer Skalierung (7) auf die zu untersuchende Oberfläche des Prüflings (8),
b. Aufnehmen eines Digitalbildes der zu untersuchenden Oberfläche unter standardisierten geometrischen und optischen Bedingungen,
c. Speichern des aufgenommenen Digitalbildes auf einem Speichermedium; und
d. Übertragen oder Kopieren des Digitalbildes in eine elektronische Datenverarbeitungseinrichtung (10,11), die Standardbilder von typischen Oberflächenzuständen bestimmter Kategorie enthält,
e. automatisches Vergleichen des aufgenommenen Digitalbildes mit den Standardbildern, wobei das zu beurteilende Digitalbild automatisch dem Standardbild zugeordnet wird, dessen Oberflächenzustände maximale Ähnlichkeit mit den Oberflächenzuständen des Digitalbildes aufweisen, und
f. Auswerten des Vergleiches unter Benennung des entsprechenden standardisierten Oberflächenzustandes bestimmter Kategorie.

2. Verfahren nach Anspruch 1, mit Festlegung mindestens einer Entfernung von Kamera (1) zur Oberfläche des Prüflings (8).

3. Verfahren nach Anspruch 1, mit Festlegung der Größe des aufzunehmenden Bildes.

4. Verfahren nach Anspruch 1, wobei die Blitzenergie festgelegt wird.

5. Verfahren nach Anspruch 1, wobei der Beleuchtungswinkel festgelegt wird.

6. Verfahren nach einem oder mehreren der Ansprüche 1 bis 5, wobei das Oberflächenprofil anhand einer bestimmten Schnittlinie durch das aufgenommene Digitalbild festgelegt und dargestellt wird.

7. Verfahren nach einem oder mehreren der Ansprüche 1 bis 5, wobei Farbintensitäten und -verteilungen gemessen und in einem Diagramm dargestellt werden.

8. Verfahren nach einem oder mehreren der Ansprüche 1 bis 5, wobei gemessene Farbintensitäten und -verteilungen sowie Profile als diskrete Werte dargestellt werden.

## Claims

1. A method of assessing surface conditions, such as the structure and/or the colour intensity or colour distribution, in particular of (non)-coated steel surfaces, with the following steps:
a. placing a graduation (7) on the surface of the specimen (8) to be examined,
b. taking a digital image of the surface to be examined under standardised geometrical and optical conditions,
c. storing the digital image taken on a storage medium; and
d. transmitting or copying the digital image in an electronic data processing device (10, 11), which contains the standard images of typical surface conditions of a certain category,
e. automatically comparing of the digital image taken with the standard images, whereas the digital image to be assessed is allocated automatically to the standard image, whose surface conditions have maximum similarity with the surface conditions of the digital image and
f. assessing the comparison in the light of the corresponding standardised surface condition of a certain category.

2. The method of claim 1, with the definition of at least one distance between the camera (1) and the surface of the specimen (8).

3. The method of claim 1, with the definition of the size of the image to be taken.

4. The method of claim 1, whereas the flash energy is defined.

5. The method of claim 1, whereas the illumination angle is defined.

6. The method according to one or several of claims 1 to 5, whereas the surface profile is defined and represented using a certain cutting line through the digital image taken.

7. The method according to one or several of claims 1 to 5, whereas the colour intensities and distributions are measured and then represented on a diagram.

8. The method according to one or several of claims 1 to 5, whereas the colour intensities and distributions measured as well as the profiles are represented as discrete values.

## Revendications

1. Dispositif d'inspection d'états de surface, comme la structure et/ou l'intensité de couleur ou -la distribution de couleur de surfaces d'acier revêtues ou non, comprenant les phases suivantes:
a. pose d'une échelle graduée (7) sur la surface de l'ébauche (8) à examiner,
b. prise d'une image numérique de la surface à examiner dans des conditions géométriques et optiques standards,
c. stockage de l'image numérique prise sur un support de stockage; et
d. transmission ou copie de l'image numérique dans un dispositif électronique de traitement de données (10, 11), contenant les images standards d'états de surface typiques d'une certaine catégorie,
e. comparaison automatique de l'image numérique prise avec les images standards, où l'image numérique à examiner est assignée automatiquement à l'image standard dont les états de surface présentent la ressemblance maximale avec les états de surface de l'image numérique et
f. évaluation de la comparaison à la lumière de l'état de surface standardisé correspondant d'une certaine catégorie.

2. Procédé selon la revendication 1, avec définition d'au moins une distance entre la caméra (1) et la surface de l'ébauche (8).

3. Procédé selon la revendication 1, avec définition de la taille de l'image à prendre.

4. Procédé selon la revendication 1, où l'on définit l'énergie du flash.

5. Procédé selon la revendication 1, où l'on définit l'angle d'éclairage.

6. Procédé selon une ou plusieurs des revendications 1 à 5, où l'on définit et représente le profil de surface à l'aide d'une certaine ligne de coupe traversant l'image numérique prise.

7. Procédé selon une ou plusieurs des revendications 1 à 5, où les intensités et les distributions de couleurs sont mesurées, puis représentées sur un diagramme.

8. Procédé selon une ou plusieurs des revendications 1 à 5, où les intensités et les distributions de couleurs mesurées de même que les profils sont représentés comme valeurs discrètes.
